(19) **Europäisches Patentamt European Patent Office Office européen des brevets**

(11) **EP 1 258 376 B1**

(12) **FASCICULE DE BREVET EUROPEEN**

(45) Date de publication et mention
de la délivrance du brevet:
**05.11.2008 Bulletin 2008/45**

(51) Int Cl.:
***B60H 1/00*** *(2006.01)*

(21) Numéro de dépôt: **02291159.8**

(22) Date de dépôt: **07.05.2002**

(54) **Procédé de régulation de la puissance thermique de l'air soufflé dans l'habitacle d'un véhicule automobile climatisé**

Verfahren zum Regulieren der thermischen Energie von Luft die in einem klimatisierten Fahrzeug-Innenraum ausgeblasen wird

Thermal power regulating process of an air stream directed inside an air conditioned vehicle passenger compartment

(84) Etats contractants désignés:
**BE DE ES GB IT**

(30) Priorité: **16.05.2001 FR 0106479**

(43) Date de publication de la demande:
**20.11.2002 Bulletin 2002/47**

(73) Titulaire: **RENAULT S.A.S.**
**92100 Boulogne Billancourt (FR)**

(72) Inventeurs:
• **L'Huillier, Jean-Marie**
**92130 Issy les Moulineaux (FR)**
• **Prenel, Frédéric**
**78830 Bullion (FR)**

(56) Documents cités:
**EP-A- 0 839 678          EP-A- 1 024 040**
**FR-A- 2 746 711          US-A- 5 775 415**

**Description**

La présente invention concerne un procédé de régulation de la puissance thermique de l'air soufflé dans l'habitacle d'un véhicule automobile par un dispositif d'aération et de chauffage et/ou de climatisation.

L'invention concerne notamment un procédé de régulation, automatique ou semi-automatique de la puissance thermique combinant la température et le débit de l'air soufflé dans l'habitacle.

L'invention concerne plus particulièrement un procédé de régulation de l'air soufflé dans l'habitacle du véhicule par un dispositif de conception générale connue comportant un boîtier qui comporte au moins une entrée d'air extérieur à température ambiante, au moins un orifice de sortie d'air intérieur qui est soufflé en direction de l'habitacle sous l'action d'un ventilateur du dispositif et au moins un organe mobile de mixage commandé, notamment un volet de mixage, pour mélanger au moins deux flux d'air à deux températures différentes pour former un flux d'air soufflé à l'intérieur de l'habitacle à une température déterminée.

La régulation de la température à l'intérieur de l'habitacle est assurée au moyen d'un calculateur électronique qui commande la position de l'organe de mixage en fonction notamment de paramètres représentatifs des températures desdits flux d'air et en fonction d'une valeur de consigne de confort choisie par l'occupant de l'habitacle.

Selon les différentes conceptions connues d'un tel dispositif et des procédés de régulations associés, il est fait appel à plusieurs capteurs de températures pour mesurer la température du flux d'air soufflé dans l'habitacle, du véhicule ainsi que les températures desdits flux d'air mélangés pour former le flux d'air soufflé, et notamment par exemple la température de l'air refroidi à travers un premier échangeur du type évaporateur et la température de l'air réchauffé à travers un deuxième échangeur du type radiateur.

Dans un tel cas, il est donc nécessaire de disposer au moins de trois capteurs de température qui participent à l'élaboration de la stratégie de régulation du confort thermique à l'intérieur de l'habitacle du véhicule.

A ces trois capteurs, il faut généralement associer un quatrième capteur de la température réelle à l'intérieur de l'habitacle afin de permettre la vérification du bon fonctionnement du dispositif et du procédé de régulation associé.

Afin de réduire le coût d'un tel ensemble et pour s'affranchir de plus des écarts ou erreurs inhérents au fonctionnement des capteurs, il est apparu souhaitable de pouvoir supprimer au moins un capteur de température.

Dans ce but, le document EP 0 839 678, qui est considéré comme l'art antérieur le plus proche, propose un procédé de régulation d'une installation de climatisation dans lequel des tables de valeurs mémorisées sont utilisées pour estimer la valeur de la température externe, ce qui permet d'éviter l'utilisation d'un capteur de température externe.

Afin de réduire les coûts d'un tel ensemble, il est souhaitable de réduire encore le nombre de capteurs de température nécessaires.

Dans ce but, l'invention propose un procédé de régulation automatique, ou semi-automatique, de la puissance thermique, combinant la température et le débit, de l'air soufflé dans l'habitacle d'un véhicule automobile par un dispositif d'aération et de chauffage et/ou de climatisation comportant un boîtier (18) qui comporte :

- au moins une entrée d'air extérieur à température dite ambiante ,
- au moins un orifice de sortie d'air intérieur qui est soufflé en direction de l'habitacle sous l'action d'un ventilateur du dispositif,
- un premier échangeur air/fluide frigorigène, pour obtenir un premier flux d'air à mélanger dont la température est inférieure ou égale à la température de l'air extérieur,
- un deuxième échangeur air/fluide caloporteur pour obtenir un deuxième flux d'air à mélanger dont la température est supérieure ou égale à la température de l'air extérieur,
- au moins un organe mobile de mixage commandé, notamment un volet de mixage (30), pour mélanger au moins deux flux d'air à deux températures différentes pour former un flux d'air soufflé à l'intérieur de l'habitacle à une température déterminée, pour obtenir une température déterminée dans l'habitacle, et comportant un calculateur électronique qui commande la position de l'organe de mixage :

  ◆ en fonction d'une valeur de consigne de confort choisie par un occupant de l'habitacle ;
  ◆ en fonction de la température ambiante ;
  ◆ en fonction de la température à l'intérieur de l'habitacle ;
  ◆ et en fonction des températures desdits flux d'air.

Selon un aspect essentiel de l'invention, la température de l'un desdits flux d'air est une valeur calculée à partir d'une première table de valeurs mémorisées lorsque le premier échangeur fonctionne, ou à partir d'une seconde table de valeurs mémorisées lorsque le premier échangeur ne fonctionne pas.

Selon un autre aspect de l'invention, le fonctionnement ou non du premier échangeur est déterminé en fonction du fonctionnement ou non d'un compresseur associé au premier échangeur.

Selon un autre aspect de l'invention, le compresseur associé au premier échangeur est à cylindrée variable pilotée par le calculateur électronique de sorte que le fluide caloporteur dans le premier échangeur soit à température constante.

Selon un autre aspect de l'invention, le procédé consiste à adresser les tables de valeurs mémorisées permettant de calculer la température du flux d'air en fonction de la température ambiante.

Selon un autre aspect de l'invention, le premier échangeur est un évaporateur, et le procédé consiste à exécuter une estimation de la température de l'air à la sortie de l'évaporateur comme mesure de la température du premier flux d'air.

Selon un autre aspect de l'invention, l'estimation consiste à exécuter un cycle d'étapes, lors de la régulation qui comporte :

- une étape de mesure de la température ambiante ; puis
- une étape de calcul de la température de l'air à la sortie de l'évaporateur dans l'hypothèse où le compresseur est actif ; puis
- une étape de test d'activité du compresseur de sorte que :

  ♦ si le test d'activité du compresseur est positif : une étape d'affectation de la température calculée à un signal représentatif de l'estimation de la température de l'air à la sortie de l'évaporateur est effectuée ; ou
  ♦ si le test d'activité du compresseur est négatif : une étape d'affectation de la température ambiante mesurée lors de l'étape précédente à un signal représentatif de l'estimation de la température de l'air à la sortie de l'évaporateur est effectuée.

Selon un autre aspect de l'invention, l'étape de calcul de la température de l'air à la sortie de l'évaporateur consiste :

- à calculer un coefficient de proportionnalité k dépendant de la tension appliquée au pulseur ;
- à calculer une estimation de la température maximale à la sortie de l'évaporateur et de la température minimale à la sortie de l'évaporateur en fonction de la valeur mesurée de la température ambiante mesurée lors de l'étape précédente ; puis
- à calculer une estimation de la température de l'air à la sortie de l'évaporateur à l'aide des paramètres calculées (k, Teva_min, Teva_max) selon une relation prédéterminée comme

$$\texttt{TAC\_on = Teva\_min + k *(Teva\_max-Teva\_min)}.$$

Selon un autre aspect de l'invention, le procédé consiste à appliquer aussi une étape de saturation de l'estimation de la température de l'air à la sortie de l'évaporateur.

Selon un autre aspect de l'invention, le procédé consiste à appliquer aussi une étape de filtrage de l'estimation de la température de l'air à la sortie de l'évaporateur.

Selon un autre aspect de l'invention, le second échangeur coopère avec un capteur de température qui fournit au calculateur électronique un paramètre représentatif de la température de l'air réchauffé dans le dernier échangeur, de sorte que la position de l'organe de mélange soit aussi déterminée en fonction de cette température.

D'autres caractéristiques et avantages de l'invention apparaîtront à la lecture de la description détaillée qui va suivre pour la compréhension de laquelle on se reportera aux dessins annexés parmi lesquels

- la figure 1 est un schéma de principe de l'installation de climatisation automatique avec réglage de la température par mélange d'air selon une conception conforme à l'état de la technique comportant un capteur de température de l'air soufflé en direction de l'habitacle ;
- la figure 2 est un organigramme de fonctionnement de l'installation de climatisation de la figure 1 ;
- la figure 3 est un schéma bloc d'un dispositif mettant en oeuvre une méthode d'estimation de la température de l'air à la sortie de l'évaporateur ;
- la figure 4 est un organigramme décrivant la méthode d'estimation de la température de l'air à la sortie de l'évaporateur.

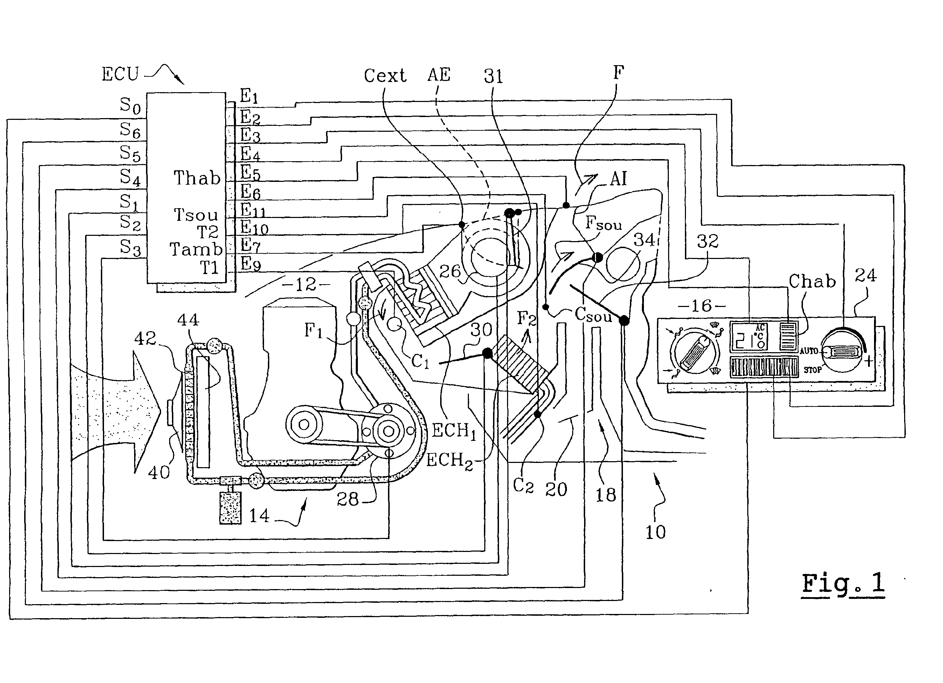

On a représenté schématiquement à la figure 1 un véhicule automobile 10 comportant un compartiment moteur 12 dans lequel est agencé un groupe motopropulseur 14 et un habitacle 16 dans lequel un dispositif d'aération et de climatisation 18 souffle de l'air pulsé par un orifice de sortie d'air intérieur AI.

Le dispositif 18 comporte un boîtier 20 comportant une entrée d'air extérieur AE agencé par exemple à la base du pare-brise 22 du véhicule.

On a aussi représenté schématiquement à la figure 1 un calculateur électronique ECU pour la mise en oeuvre du procédé de régulation automatique de la température à l'intérieur de l'habitacle du véhicule, ainsi qu'un tableau de commande 24 de l'aération et/ou de climatisation de l'habitacle, qui est agencé à l'intérieur du véhicule.

Le tableau de commande 24 comporte notamment un bouton de mise en marche du système frigorifique relié à une entrée E1 du calculateur, un bouton de sélection du mode de recyclage de l'air pour l'isolation de l'habitacle relié à une entrée E2 du calculateur, un organe de commande du niveau de débit d'air automatique, avec possibilité de pilotage manuel, relié à une entrée E3 du calculateur, un élément d'affichage (notamment d'une consigne de confort sélectionnée par l'opérateur et représentée par exemple par une valeur de température) qui est reliée à une entrée E4 du calculateur.

Le tableau de commande 24 intègre ici aussi, à titre d'exemple, un capteur Chab de la température à l'intérieur de l'habitacle qui est relié à une entrée E5 du calculateur électronique, tandis que l'ensemble du tableau de commande 26 est aussi relié à une sortie S0 du calculateur permettant un retour d'informations sur le fonctionnement, en direction du tableau de commande 24.

Le calculateur ECU peut aussi recevoir, par une entrée E6, un paramètre relatif à l'ensoleillement extérieur qui lui est fourni par un capteur associé agencé par exemple à l'intérieur de l'habitacle à la base du pare-brise 22.

Une entrée E7 du calculateur est reliée à un capteur de température Cext qui transmet au calculateur un signal représentatif de la température de l'air extérieur, dite température ambiante Tamb.

Selon une conception connue, l'air extérieur à température ambiante Tamb qui pénètre par l'entrée AE dans le boîtier 20 est entraîné par un ventilateur centrifuge 26 pour traverser un échangeur thermique ECH1 qui est ici un évaporateur pour le refroidissement de l'air qui est associé à un compresseur 28 entraîné par le moteur thermique du véhicule.

Le calculateur ECU comporte une sortie S1 qui pilote la tension d'alimentation du ventilateur centrifuge 26 et une entrée E9 qui est reliée à un capteur C1 qui fournit une information représentative de la température T1 de l'air à la sortie de l'échangeur ECH1.

Le boîtier 20 comporte aussi un volet articulé mobile 30 de répartition du premier flux F1 d'air qui a traversé l'évaporateur ECH1 pour qu'il soit orienté directement vers la sortie AI en totalité ou partiellement, en fonction de la position angulaire du volet 30, l'autre partie du flux étant susceptible de constituer un second flux F2 qui traverse alors un second échangeur thermique ECH2 qui est ici un radiateur relié au circuit de refroidissement du moteur du véhicule.

Le boîtier 20 avec son volet mobile commandé 30 permet ainsi de former, par mélange des flux F1 et F2 en proportions déterminées, un flux de sortie ou flux d'air soufflé Fsou en direction de l'habitacle qui sort du boîtier par l'entrée AI pour constituer le flux principal F d'air pulsé ou soufflé dans l'habitacle 16.

Une sortie S2 du calculateur électronique ECU commande la position angulaire du volet de mélange 30 pour déterminer la température de flux d'air soufflé Fsou. Cette température résulte du fonctionnement ou non de l'évaporateur ECH1 avec son compresseur 28, de la position angulaire du volet 30, du régime du ventilateur 26 et de la température du liquide caloporteur qui alimente le radiateur ou échangeur ECH2, une entrée E10 du calculateur étant reliée à un capteur C2 de la température T2 du liquide caloporteur qui est directement représentatif de la température du flux d'air F2 à la sortie de l'échangeur ECH2.

Dans la conception selon l'état de la technique, une entrée E11 du calculateur électronique ECU est reliée à un capteur Csou qui lui fournit un paramètre représentatif de la température Tsou de l'air soufflé en direction de l'habitacle 16.

Dans la conception illustrée schématiquement à la figure 1, le calculateur électronique comporte encore une sortie S3 reliée à la commande de l'embrayage du compresseur 28, une sortie S4 reliée à la commande d'un volet d'entrée d'air 31, une sortie S5 reliée à la commande de la position angulaire d'un volet de commande du désembuage 34, et une sortie S6 qui commande la position angulaire d'un volet 32 de détermination de la quantité d'air de l'habitacle qui est recyclée dans celui-ci à travers le boîtier 20.

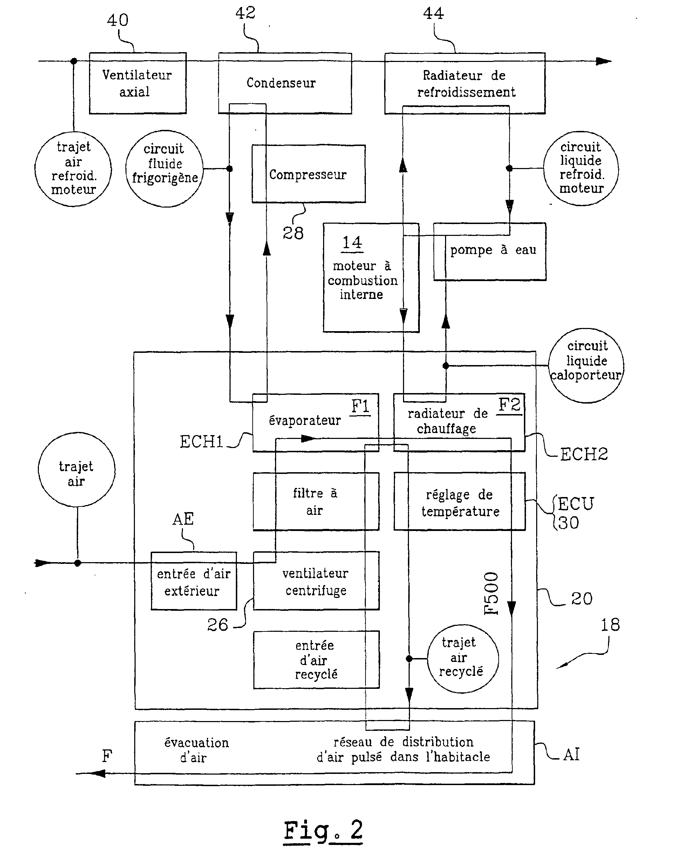

Certains des composants qui viennent d'être décrits structurellement en référence à la figure 1 sont représentés de façon schématique sur le diagramme de la figure 2 sur laquelle sont représentés les principaux trajets de fluide et d'air.

On voit notamment le trajet de l'air de refroidissement du moteur qui traverse un ventilateur axial 40, un condenseur 42, et le radiateur 44 de refroidissement du moteur.

Le circuit de fluide frigorigène associé à l'évaporateur ECH1 comprend notamment le condenseur 42 et le compresseur 28, et le circuit de liquide caloporteur associé au radiateur de chauffage ou échangeur ECH2 fait circuler l'eau de refroidissement du moteur, notamment à travers le radiateur 44 et à travers l'échangeur ECH2.

La figure 2 fait également apparaître le trajet d'air pour l'aération et le chauffage et/ou la climatisation de l'habitacle du véhicule qui comporte notamment les deux échangeurs ECH1 et ECH2, ainsi qu'un module de réglage de la température qui intègre notamment le calculateur électronique ECU et la commande du volet 30 de mélange des flux F1 et F2 traversant les deux échangeurs pour constituer le flux d'air soufflé Fsou.

L'invention permet de supprimer le capteur C1 de la température T1 de l'air à la sortie de l'échangeur ECH1.

L'invention permet aussi de supprimer le capteur Csou de la mesure de la température d'air soufflé Tsou, ainsi bien entendu que l'entrée correspondante du calculateur électronique. Dans un mode préféré de réalisation, la régulation de la puissance thermique, et notamment de la température de l'air dans l'habitacle est, conformément aux enseignements de l'invention, obtenue sans mesure directe de la température de l'air soufflé à l'intérieur de l'habitacle et sans mesure de la température de l'air à sortie du condenseur, la température Tsou étant déduite du fait que l'échangeur ECH1 fonctionne ou ne fonctionne pas.

Selon le mode d'obtention de la température Tsou, le calculateur électronique ECU calcule la température du flux d'air F1 à partie d'une première table de valeurs mémorisée lorsque l'échangeur ECH1 fonctionne ou à partir d'une seconde table de valeurs mémorisée lorsque l'échangeur ECH1 ne fonctionne pas.

La commande Cde_Volet du volet 30 de mélange est calculée par l'unité électronique ECU au moyen d'un module de calcul de la température du flux d'air F1, à l'aide d'une fonction prédéterminée CV() enregistrée dans le calculateur électronique ECU selon une relation de la forme : Cde_Volet = CV(T1).

Le fonctionnement de l'échangeur dépend notamment du fonctionnement du compresseur 28, qui peut être détecté par un capteur.

Outre les tables de valeurs mémorisées ou des modules de calcul équivalents des paramètres autrement tabulés, le calculateur électronique ECU peut aussi prendre en compte des facteurs de correction dépendant de la température extérieure de l'air ambiant Tamb lorsque celle-ci est particulièrement élevée et dépasse une valeur de seuil prédéterminée.

Un autre facteur de correction dépend du recyclage éventuel de l'air de l'habitacle, ainsi que du régime du ventilateur qui pulse ou souffle l'air car, au régime maximal de celui-ci, on augmente fortement le débit d'air soufflé ce qui fait que l'air n'est plus aussi froid à la sortie de l'échangeur ECH1.

Toutes ces corrections éventuelles sont prises en compte par le calculateur pour déterminer la position du volet 30, celle-ci pouvant bien entendu en outre être corrigée par une boucle d'asservissement en fonction de la température réelle Thab obtenue dans l'habitacle.

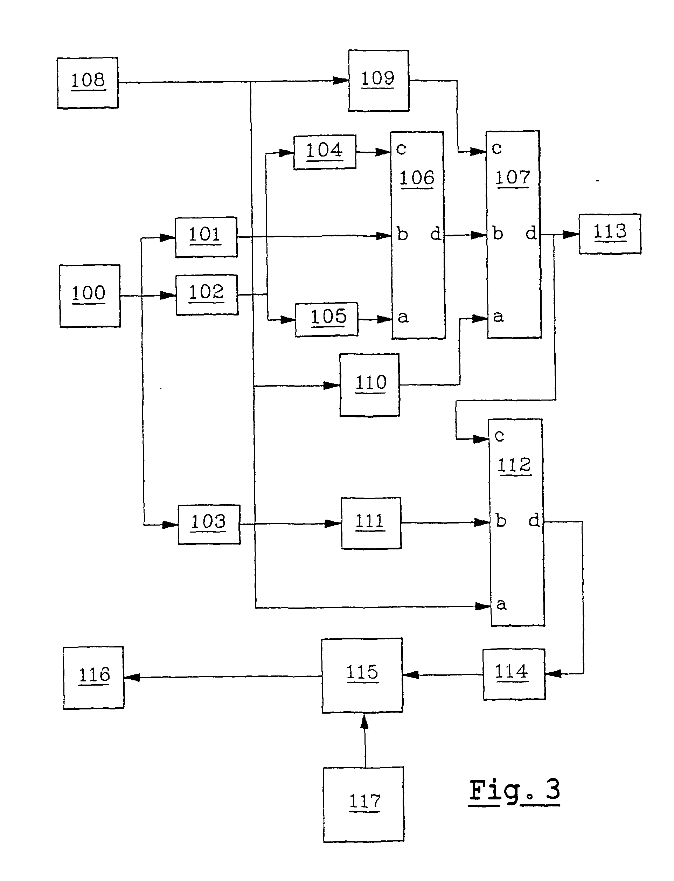

A la figure 3, on a représenté un schéma bloc d'un dispositif mettant en oeuvre une méthode d'estimation de la température de l'air à la sortie de l'évaporateur, ou estimateur.

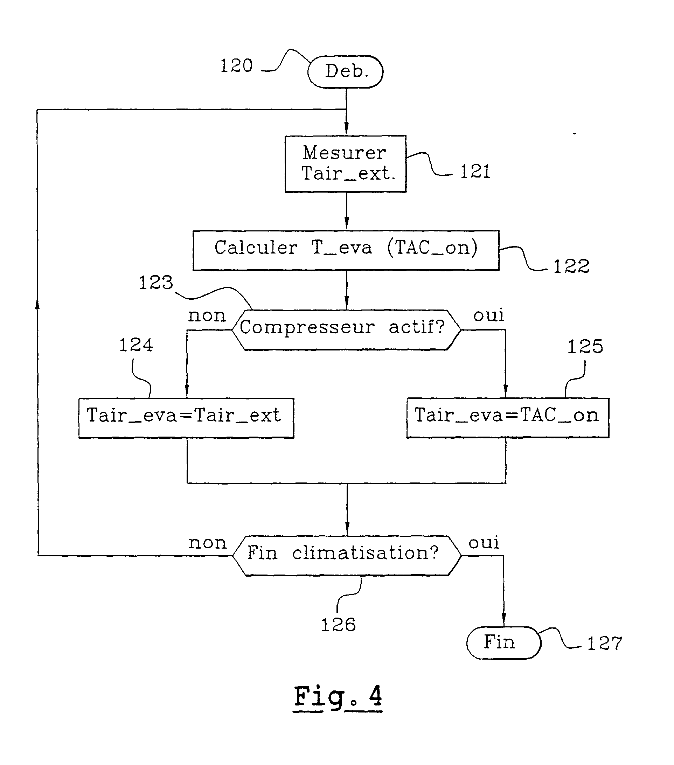

A la figure 4, on a représenté un organigramme présentant la méthode d'estimation de la température de l'air à la sortie de l'évaporateur.

Après une étape de début 120, au cours de laquelle on réalise l'initialisation des paramètres de fonctionnement de l'estimateur qui sera discuté à l'aide de la figure 3, on exécute une première étape 121 pour mesurer la température ambiante Tamb qui sera ci-après désignée par Tair_ext. Le paramètre ou signal Tair_ext est utilisé ensuite pour une seconde étape 122 de calcul d'une température d'air à la sortie de l'évaporateur si le compresseur est actif. A l'issue de cette étape 122, un test 123 pour déterminer si le compresseur est actif est exécuté. Dans le cas où le test de l'étape 123 est positif, une étape 125 affecte à un paramètre ou signal d'estimation d'évaluation de la température d'air à la sortie de l'évaporateur, notée Tair_eva, à la valeur de la température de sortie d'air à l'évaporateur TAC_on calculée lors de l'étape 122.

Si le test de l'étape 123 est négatif, le paramètre Tair_eva est égal à la température d'air ambiant représenté par le signal Tair_ext.

Une fois le calcul du paramètre Tair_eva calculé par l'étape 124 ou l'étape 125, on exécute un test 126 de fin de climatisation. Tant que le test 126 est négatif, on retourne à l'exécution de la mesure de la température ambiante de l'étape 121. Quand le test de fin de climatisation est positif, on exécute une étape 127 de fin d'estimation de la température de l'air à la sortie de l'évaporateur.

En revenant à la figure 3, l'estimateur de température de l'air à la sortie de l'évaporateur comporte une pluralité de bornes d'entrée 100 qui sont connectées à des lignes transmettant des signaux de détection respectivement :

- de la position réelle de l'actionneur de recyclage : recopie_recy,
- de recopie de la commande du compresseur : recopie_AC,
- de recopie de la tension électrique de fonctionnement du pulseur : recopie_pulseur.

Les trois signaux de détection sont enregistrés à chaque cycle de fonctionnement de l'estimateur dans des mémoires ou registres respectivement 101 pour le paramètre recopie_recy, 102 pour le paramètre recopie_pulseur et 103 pour le paramètre recopie_AC.

L'estimateur de la température de l'air à la sortie de l'évaporateur comporte aussi une borne d'entrée 108 connectée à une sonde de mesure de la température de l'entrée d'air qui fourni un signal Tair_ext, échantillonné, numérisé et mémorisé à chaque cycle de fonctionnement de l'estimateur et transmise à :

- un premier module 109 de conversion de la température d'entrée d'air en une valeur représentant une valeur maximale de la température de sortie de l'évaporateur, température maximale notée Teva_max ;
- un second module 110 de conversion de la température d'entrée d'air en une valeur représentant une valeur minimale de la température de sortie de l'évaporateur, température minimale notée Teva_min ;
- une entrée « a » d'un module de commutation 112.

Dans un mode préféré de réalisation, les signaux recopie_recy et recopie_AC sont des signaux binaires valant 0 ou 1 et qui indiquent le mode de fonctionnement dans lequel se trouve le dispositif de climatisation de l'invention.
Le signal recopie_pulseur est un paramètre numérique prenant un nombre prédéterminé de valeurs possibles et indiquant le régime de fonctionnement du pulseur à chaque instant. Le signal recopie_pulseur est donc un signal qui prend une certaine valeur numérique à chaque cycle de fonctionnement de l'estimateur de température de l'air à la sortie de l'évaporateur
Dans le procédé d'estimation de la température de l'air à la sortie de l'évaporateur Teva, on exécute :

- le calcul d'un coefficient de proportionnalité k dépendant de la tension appliquée au pulseur (recopie_Pulseur) ;
- le calcul d'une estimation de la température maximale à la sortie de l'évaporateur (Teva_max) et de la température minimale à la sortie de l'évaporateur (Teva_min) en fonction de la valeur mesurée de la température ambiante (Tair_ext) mesurée lors de l'étape précédente (121) ; puis
- le calcul d'une estimation de la température de l'air à la sortie de l'évaporateur (TAC_on) à l'aide des paramètres calculées (k, Teva_min, Teva_max) selon une relation prédéterminée comme

$$TAC\_on = Teva\_min + k *(Teva\_max-Teva\_min).$$

Dans l'estimateur se trouvent les modules de calcul 104-107 de ces étapes de la méthode d'estimation.
Un signal de lecture de la mémoire 102 dans laquelle est enregistré l'échantillon du signal recopie_pulseur est connecté à des bornes d'entrée de deux modules respectivement 104 et 105 qui produisent chacun un paramètre représentatif du niveau de performance de l'évaporateur selon le mode de circulation de l'air dans le climatiseur, et qui est une fonction prédéterminée de la valeur instantanée du signal recopie_pulseur.
Dans un mode de réalisation, le module de conversion 104 comporte une table enregistrée des valeurs du paramètre désigné par KP_recy qui représente le niveau de performance de l'évaporateur quand le pulseur travaille sur de l'air de recyclage. Le circuit de l'air est refermé sur lui-même en mode recyclage. L'adressage de la table enregistrée dans le module 104 affecte une valeur unique rendue disponible à la borne de sortie du module 104, valeur qui est exprimée par la relation :
KP_recy = f(recopie_pulseur) dans laquelle (f) désigne la table, ou une fonction équivalente exécutée par un module de calcul convenable du calculateur électronique ECU, et recopie_pulseur la valeur d'adressage en entrée. Le signal ou paramètre KP_recy est transmis à une borne d'entrée notée « c » d'un module de commutation 106.
Dans le même mode de réalisation, le module de conversion 105 comporte, similairement au module 104, une table enregistrée des valeurs du paramètre désigné par KP_air_ext qui représente le niveau de performance de l'évaporateur quand le pulseur travaille avec de l'air extérieur.
L'adressage de la table enregistrée dans le module 105 affecte une valeur unique rendue disponible à la borne de sortie du module 104, valeur qui est exprimée par la relation :

$$KP\_air\_ext = g(recopie\_pulseur).$$

dans laquelle (g) désigne la table, ou une fonction équivalente exécutée par un module de calcul convenable du calculateur électronique ECU, et recopie_pulseur la valeur d'adressage en entrée. Le signal ou paramètre KP_air_ext est transmis à une borne d'entrée, notée « a », du module de commutation 106 précité.
Le module de commutation 106 comporte aussi une borne de commande « b » qui est connectée à la borne de sortie du registre 101 qui maintient pendant la durée du cycle de travail de l'estimateur de température de sortie d'évaporateur, la valeur en cours du signal recopie_recy qui vaut 0 ou 1.
Le module de commutation 106, selon l'état de sa borne de commande « b », transfère la valeur présentée à sa première borne d'entrée « a » ou la valeur présentée à sa seconde borne d'entrée « c » à sa borne de sortie « d », de sorte qu'à la sortie « d » du module de commutation 106, un paramètre ou signal k soit défini par la relation (1)

$$k = KP\_recy*(recopie\_recy==1) +$$
$$KP\_air\_ext*(recopie\_recy == 0) ; \qquad (1)$$

Dans cette équation (1), le terme dans lequel se trouve le double signal « == » représente le test d'égalité du membre de gauche au membre de droite, et vaut la valeur « 1 » quand le test est vrai et « 0 » dans le cas contraire, ce qui fait que le paramètre ou signal k vaut la valeur KP_recy ou la valeur KP_air_ext, et qui est transmise à une borne d'entrée notée « b » d'un module de calcul 107 qui va être décrit.

Dans le procédé d'estimation de la température de l'air à la sortie de l'évaporateur Teva, on exécute :

- une étape de mesure de la température ambiante (Tamb ; Tair_ext ; puis
- une étape de calcul de la température de l'air (TAC_on) à la sortie de l'évaporateur (ECH1) dans l'hypothèse où le compresseur est actif ; puis
- une étape de test d'activité du compresseur de sortie que :

  ♦ si le test est positif : une étape d'affectation de la température (TAC_on) calculée à un signal représentatif de l'estimation de la température de l'air (Tair_eva) à la sortie de l'évaporateur (ECH1) est effectuée ; ou
  ♦ si le test est négatif : une étape d'affectation de la température ambiante mesure lors de l'étape précédente à un signal représentatif de l'estimation de la température de l'air (Tair_eva) à la sortie de l'évaporateur (ECH1) est effectuée.

Le module 107 comporte deux autres bornes d'entrée notées respectivement « a » et « c » qui sont respectivement connectées aux bornes de sortie du second module de conversion 110 et du premier module de conversion 109.

L'entrée « a » reçoit donc une valeur Teva_min correspondante à une température minimale de sortie de l'évaporateur en fonction de la température d'entrée d'air qui vient d'être calculée à l'aide de la valeur présenté à la borne 108 de l'entrée de l'estimateur et qui permet d'obtenir le meilleur rendement de fonctionnement du dispositif de climatisation. De même, l'entrée « c » du module de calcul 107 reçoit une valeur Teva_max correspondant à la température de sortie maximale de l'évaporateur en fonction de la température d'entrée d'air qui vient d'être calculée à l'aide de la valeur présenté à la borne 108 de l'entrée de l'estimateur et qui permet d'obtenir le meilleur rendement de fonctionnement du dispositif de climatisation.

La borne de sortie « d » du module de calcul 107 produit un signal ou paramètre TAC_on qui est calculé selon l'équation (2) ci-dessous :

$$TAC\_on = Teva\_min + k*(Teva\_max - Teva\_min) \qquad (2)$$

équation dans laquelle le coefficient k est le paramètre présenté à l'entrée « b » du module de calcul 107. Le paramètre TAC_on représente la valeur estimée de la température de l'air à la sortie de l'évaporateur lorsque le signal de recopie_ AC est actif. Le signal ou paramètre TAC_on est transmis à la borne de sortie 113 de sortie de l'estimateur pour être utilisé éventuellement par un autre dispositif électronique du véhicule. Le signal ou paramètre TAC_on est aussi transmis à une première borne d'entrée « c » d'un module de commutation 112, analogue au module de commutation 106, dont on a déjà décrit que son autre borne d'entrée « a » a reçu le signal ou paramètre Teair de mesure de la température de l'extérieur.

La borne de commande « b » du module de commutation 112 est connectée à la borne de sortie d'un module de test 111 dont la borne d'entrée est connectée à la borne de sortie de lecture du registre 103 dans lequel, au moins pendant le temps de cycle de travail de l'estimateur, est maintenue la valeur recopie_AC qui vaut 0 ou 1. Le module de test 111 permet de maintenir de manière stable la valeur 0 ou 1 de ce signal.

La borne de sortie « d » du module de commutation 112 recopie donc l'état de la borne d'entrée « a » si la borne de commande « b » reçoit un signal 0 ou l'état de la borne d'entrée « c » si la borne de commande « b » reçoit un signal 1.

Le signal ou paramètre Teva_0 qui vaut donc ou bien la valeur en cours de TAC_on ou bien la valeur Tair_ext de l'air extérieur est définie par l'équation (3) ci-dessous :

$$\text{Teva\_0} = \text{TAC\_on*(recopie\_AC == 1)} +$$
$$\text{Tair\_ext*(recopie\_AC == 0)} \qquad (3)$$

Dans laquelle le signe « == » a la même signification que pour l'équation (1) ci-dessus.

Le signal ou paramètre Teva_0, qui représente une première estimation de la température de sortie de l'évaporateur, est transmis ensuite à une borne d'entrée d'un module de saturation 114 qui permet d'appliquer à la valeur estimée Teva_0 une saturation pour éviter que la température de sortie de l'évaporateur soit estimée à des valeurs trop élevées ou trop faibles.

La borne de sortie du module de calcul de saturation 114 transmet un signal ou paramètre Teva_sat qui représente l'effet de la saturation appliquée par le module 114 sur la première estimation de la température de sortie de l'évaporateur, à une borne d'entrée de traitement d'un filtre 115 dont une borne de sortie produit un signal ou paramètre filtré désigné par Teva_filtré.

Le filtre 115 travaille selon l'équation 4 ci-dessous

$$Teva\_filtré[i] = [\sum_{j=i-N}^{j=i} Teva\_sat[j]]/N$$

$$(4)$$

A chaque instant représenté par l'indexation notée « i », en fonction du nombre N d'échantillons déterminé par un module 117 de configuration du filtrage, on réalise un filtre de premier ordre sur les valeurs d'entrée Teva_sat.

Le signal de sortie Teva_filtré est ensuite transmis à la borne de sortie 116 de l'estimateur de température de sortie de l'évaporateur.

Le module de filtrage 115 et son module de commande 117 sont aussi munis de moyens pour déterminer le nombre d'échantillons qui sont maintenus dans le filtre, ainsi que des procédures d'initialisation de façon à transmettre des valeurs d'estimation de la température de sortie de l'évaporateur convenable.

L'estimateur de température de sortie de l'évaporateur comporte aussi des moyens de diagnostic qui permettent de vérifier la cohérence des valeurs calculées dans l'estimateur.

Un module de diagnostic est donc connecté à différents signaux ou paramètres estimés dans l'estimateur, et produit un signal de sortie diagnostic qui est utilisé par le calculateur du véhicule.

Les paramètres ou signaux utilisés pour les diagnostics sont essentiellement :

- le signal ou paramètre k de sortie du module de commutation 106 ;
- le signal ou paramètre TAC_on connecté déjà à la borne de sortie 113 ;
- la valeur de l'estimation de la température de sortie de l'évaporateur Teva_filtré déjà transmise à la borne de sortie 113 de l'estimateur.

**Revendications**

1. Procédé de régulation automatique, ou semi-automatique, de la puissance thermique, combinant la température et le débit, de l'air soufflé dans l'habitacle (16) d'un véhicule automobile (10) par un dispositif (18) d'aération et de chauffage et/ou de climatisation comportant un boîtier (18) qui comporte :

   - au moins une entrée d'air extérieur (AE) à température dite ambiante (Tamb ; Tair_ext),
   - au moins un orifice de sortie d'air intérieur (AI) qui est soufflé en direction de l'habitacle (16) sous l'action d'un ventilateur (26) du dispositif,
   - un premier échangeur air/fluide frigorigène (ECH1), pour obtenir un premier flux d'air (F1) à mélanger dont la température (T1) est inférieure ou égale à la température (Tamb) de l'air extérieur,
   - un deuxième échangeur air/fluide caloporteur (ECH2) pour obtenir un deuxième flux d'air (F2) à mélanger dont la température (T2) est supérieure ou égale à la température (Tamb) de l'air extérieur,
   - au moins un organe mobile de mixage (30) commandé, notamment un volet de mixage (30), pour mélanger au moins deux flux d'air (F1, F2) à deux températures (T1, T2) différentes pour former un flux d'air (Fsou) soufflé à l'intérieur de l'habitacle (16) à une température déterminée (Tsou), pour obtenir une température déterminée (Chab) dans l'habitacle,

et comportant un calculateur électronique (ECU) qui commande la position de l'organe de mixage (30) :

- ♦ en fonction d'une valeur de consigne de confort choisie par un occupant de l'habitacle ;
- ♦ en fonction de la température ambiante (Tamb ; Tair_ext) ;
- ♦ en fonction de la température à l'intérieur de l'habitacle (Chab) ;
- ♦ et en fonction des températures (T1, T2) desdits flux d'air (F1, F2) ;

**caractérisé en ce que** la température (T1) de l'un desdits flux d'air (F1) est une valeur calculée à partir d'une première tablé de valeurs mémorisées lorsque le premier échangeur (ECH1) fonctionne, ou à partir d'une seconde table de valeurs mémorisées lorsque le premier échangeur (ECH1) ne fonctionne pas.

2. Procédé selon la revendication précédente, **caractérisé en ce que** le fonctionnement ou non du premier échangeur (ECH1) est déterminé en fonction du fonctionnement ou non d'un compresseur (28) associé au premier échangeur.

3. Procédé selon la revendication 2, **caractérisé en ce que** le compresseur (28) associé au premier échangeur (ECH1) est à cylindrée variable pilotée par le calculateur électronique (ECU) de sorte que le fluide caloporteur dans le premier échangeur (ECH1) soit à température constante.

4. Procédé selon l'une quelconque des revendications précédentes, **caractérisé en ce qu'**il consiste à adresser les tables de valeurs mémorisées permettant de calculer la température (T1) du flux d'air (F1) en fonction de la température ambiante (Tamb ; Text_air).

5. Procédé selon la revendication 2 ou 3, **caractérisé en ce que** le premier échangeur (ECH1) est un évaporateur, et **en ce qu'**il consiste à exécuter une estimation de la température de l'air à la sortie de l'évaporateur (ECH1) comme mesure de la température (T1) du premier flux d'air.

6. Procédé selon la revendication 5, **caractérisé en ce que** l'estimation consiste à exécuter un cycle d'étapes (121-126), lors de la régulation qui comporte :

   - une étape (121) de mesure de la température ambiante (Tamb ; Tair_ext) ; puis
   - une étape (122) de calcul de la température de l'air (TAC_on) à la sortie de l'évaporateur (ECH1) dans l'hypothèse où le compresseur (28) est actif ; puis
   - une étape (123) de test d'activité du compresseur (28) de sorte que :

      ♦ si le test (123) d'activité du compresseur est positif : une étape (125) d'affectation de la température (TAC_on) calculée à un signal représentatif de l'estimation de la température de l'air (Tair_eva) à la sortie de l'évaporateur (ECH1) est effectuée ; ou
      ♦ si le test (123) d'activité du compresseur est négatif : une étape (124) d'affectation de la température ambiante (Tair_ext) mesurée lors de l'étape précédente (121) à un signal représentatif de l'estimation de la température de l'air (Tair_eva) à la sortie de l'évaporateur (ECH1) est effectuée.

7. Procédé selon la revendication 6, **caractérisé en ce que** l'étape (122) de calcul de la température de l'air (TAC_on) à la sortie de l'évaporateur (ECH1) consiste :

   - à calculer un coefficient de proportionnalité k dépendant de la tension appliquée au pulseur (recopie_Pulseur) ;
   - à calculer une estimation de la température maximale à la sortie de l'évaporateur (Teva_max) et de la température minimale à la sortie de l'évaporateur (Teva_min) en fonction de la valeur mesurée de la température ambiante (Tair_ext) mesurée lors de l'étape précédente (121) ; puis
   - à calculer une estimation de la température de l'air à la sortie de l'évaporateur (TAC_on) à l'aide des paramètres calculées (k, Teva_min, Teva_max) selon une relation prédéterminée comme

$$\text{TAC\_on} = \text{Teva\_min} + k *(\text{Teva\_max} - \text{Teva\_min}).$$

8. Procédé selon la revendication 6 ou 7, **caractérisé en ce qu'**il consiste à appliquer aussi une étape de saturation (114) de l'estimation de la température de l'air à la sortie de l'évaporateur (Teva_0).

9. Procédé selon l'une des revendications 6 à 8, **caractérisé en ce qu'**il consiste à appliquer aussi une étape de filtrage (115) de l'estimation de la température de l'air à la sortie de l'évaporateur (Teva_0 ; Teva_sat).

10. Procédé selon l'une quelconque des revendications précédentes, **caractérisé en ce que** le second échangeur (ECH2) coopère avec un capteur de température (C2) qui fournit au calculateur électronique (ECU) un paramètre représentatif de la température (T2) de l'air réchauffé dans le deuxième échangeur, de sorte que la position de l'organe de mélange soit aussi déterminée en fonction de cette température (T2).

**Claims**

1. Method of automatically or semi-automatically regulating the thermal power, combining both temperature and flow rate, of the air blown into the passenger compartment (16) of a motor vehicle (10) by a ventilation and heating and/or air-conditioning device (18) comprising a module (20) that comprises:

   - at least one external air inlet ($AIR_{ext}$) at what is called the ambient temperature (Tamb; Tair_ext);
   - at least one internal air outlet orifice ($AIR_{int}$), the air being blown into the passenger compartment (16) under the action of a fan (26) of the device;
   - an air/refrigerant first exchanger ($EX_1$) for obtaining a first air flow ($F_1$) to be mixed, the temperature ($T_1$) of which is equal to or less than the temperature (Tamb) of the external air;
   - an air/heat-transfer fluid second exchanger ($EX_2$) for obtaining a second air flow ($F_2$) to be mixed, the temperature ($T_2$) of which is equal to or greater than the temperature (Tamb) of the external air;
   - at least one controlled movable mixing member (30), especially a mixing flap (30), for mixing at least two air flows ($F_1$, $F_2$) at two different temperatures ($T_1$, $T_2$) in order to form an air flow (Fblow) blown into the passenger compartment (16) at a defined temperature (Tblow) in order to obtain a defined temperature (Tcab) in the passenger compartment,

   and including an electronic computer (ECU) that controls the position of the mixing member (30):

   - according to a comfort setpoint value chosen by an occupant of the passenger compartment;
   - according to the ambient temperature (Tamb; Tair_ext);
   - according to the temperature inside the passenger compartment (Tcab); and
   - according to the temperatures ($T_1$, $T_2$) of said air flows ($F_1$, $F_2$),

   **characterized in that** the temperature ($T_1$) of one ($F_1$) of said air flows is a value calculated from a first table of stored values when the first exchanger ($EX_1$) is operating or from a second table of stored values when the first exchanger ($EX_1$) is not operating.

2. Method according to the preceding claim, **characterized in that** the operation or non-operation of the first exchanger ($EX_1$) is determined according to the operation or non-operation of a compressor (28) associated with the first exchanger.

3. Method according to Claim 2, **characterized in that** the compressor (28) associated with the first exchanger ($EX_1$) has a variable capacity controlled by the electronic computer (ECU) so that the heat-transfer fluid in the first exchanger ($EX_1$) is at constant temperature.

4. Method according to any one of the preceding claims, **characterized in that** it consists in addressing the tables of stored values for calculating the temperature ($T_1$) of the air flow ($F_1$) according to the ambient temperature (Tamb; Tair_ext).

5. Method according to Claim 2 or 3, **characterized in that** the first exchanger ($EX_1$) is an evaporator and **in that** it consists in carrying out an estimation of the temperature of the air at the outlet of the evaporator ($EX_1$) as the measure of the temperature ($T_1$) of the first air flow.

6. Method according to Claim 5, **characterized in that** the estimation consists in carrying out a cycle of steps (121-126), during the regulation, which comprises:

   - a step (121) of measuring the ambient temperature (Tamb; Tair_ext); then

- a step (122) of calculating the temperature (TAC_on) of the air at the outlet of the evaporator (EX$_1$) assuming that the compressor (28) is active; and then
- a step (123) of testing activity of the compressor (28) so that:

  • if the compressor activity test (123) is positive, a step (125) of assigning the calculated temperature (TAC_ on) to a signal representative of the estimation of the air temperature (Tair_eva) at the outlet of the evaporator (EX$_1$) is carried out; or
  • if the compressor activity test (123) is negative, a step (124) of assigning the ambient temperature (Tair_ ext) measured during the previous step (121) to a signal representative of the estimation of the air temperature (Tair_eva) at the outlet of the evaporator (EX$_1$) is carried out.

7. Method according to Claim 6, **characterized in that** step (122) of calculating the air temperature (TAC_on) at the outlet of the evaporator (EX$_1$) consists in:

  - calculating a proportionality coefficient k dependent on the voltage applied to the blower (recopie_blower);
  - calculating an estimate of the maximum temperature (Teva_max) at the outlet of the evaporator and the minimum temperature (Teva_min) at the outlet of the evaporator according to the measured value of the ambient temperature (Tair_ext) measured during the previous step (121); and then
  - calculating an estimate of the air temperature (TAC_on) at the outlet of the evaporator using the calculated parameters (k, Teva_min, Teva_max) according to a predetermined equation, such that:

$$\texttt{TAC\_on = Teva\_min + k * (Teva\_max-Teva\_min)}.$$

8. Method according to Claim 6 or 7, **characterized in that** it consists in also applying a step (114) of saturating the estimate of the air temperature at the outlet of the evaporator (Teva_0).

9. Method according to one of Claims 6 to 8, **characterized in that** it consists in also applying a step (115) of filtering the estimate of the air temperature at the outlet of the evaporator (Teva_0; Teva_sat).

10. Method according to one of the preceding claims, **characterized in that** the second exchanger (EX$_2$) cooperates with a temperature sensor (S$_2$) that delivers a parameter representative of the temperature (T$_2$) of the air heated in the second exchanger to the electronic computer (ECU) so that the position of the mixing member is also determined according to this temperature (T$_2$).

**Patentansprüche**

1. Verfahren zur automatischen oder halbautomatischen Regelung der Wärmeleistung, das die Temperatur und den Durchsatz der Luft kombiniert, welche von einer Vorrichtung (18) zur Belüftung und Erwärmung und/oder Klimatisierung in den Innenraum (16) eines Kraftfahrzeugs (10) geblasen wird, die ein Gehäuse (20) aufweist, das enthält:

  - mindestens einen Einlass von Außenluft (AE) mit so genannter Umgebungstemperatur (Tamb; Tair_ext),
  - mindestens eine Austrittsöffnung (AI) für Innenluft, die unter der Wirkung eines Ventilators (26) der Vorrichtung in Richtung des Innenraums (16) geblasen wird,
  - einen ersten Luft/Kühlmittel-Tauscher (ECH1), um einen ersten zu mischenden Luftstrom (F1) zu erhalten, dessen Temperatur (T1) niedriger als die oder gleich der Temperatur (Tamb) der Außenluft ist,
  - einen zweiten Luft/Wärmeträger-Tauscher (ECH2), um einen zweiten zu mischenden Luftstrom (F2) zu erhalten, dessen Temperatur (T2) höher als die oder gleich der Temperatur (Tamb) der Außenluft ist,
  - mindestens ein gesteuertes bewegliches Mischorgan (30), insbesondere eine Mischklappe (30), um mindestens zwei Luftströme (F1, F2) mit zwei unterschiedlichen Temperaturen (T1, T2) zu mischen, um einen Luftstrom (Fsou) zu bilden, der mit einer bestimmten Temperatur (Tsou) ins Innere des Innenraums (16) geblasen wird, um eine bestimmte Temperatur (Chab) im Innenraum zu erhalten,

  und einen elektronischen Rechner (ECU) aufweist, der die Stellung des Mischorgans (30) steuert:

  ♦ in Abhängigkeit von einem Komfort-Sollwert, der von einem Insassen des Innenraums gewählt wird;

♦ in Abhängigkeit von der Umgebungstemperatur (Tamb; Tair_ext);
♦ in Abhängigkeit von der Temperatur im Inneren des Innenraums (Chab),
♦ und in Abhängigkeit von den Temperaturen (T1, T2) der Luftströme (F1, F2);

**dadurch gekennzeichnet, dass** die Temperatur (T1) eines der Luftströme (F1) ein Wert ist, der ausgehend von einer ersten Tabelle von Werten, die gespeichert werden, wenn der erste Tauscher (ECH1) arbeitet, oder ausgehend von einer zweiten Tabelle von Werten berechnet wird, die gespeichert werden, wenn der erste Tauscher (ECH1) nicht arbeitet.

2. Verfahren nach dem vorhergehenden Anspruch, **dadurch gekennzeichnet, dass** der Betrieb oder nicht des ersten Tauschers (ECH1) in Abhängigkeit vom Betrieb oder nicht eines dem ersten Tauscher zugeordneten Verdichters (28) bestimmt wird.

3. Verfahren nach Anspruch 2, **dadurch gekennzeichnet, dass** der dem ersten Tauscher (ECH1) zugeordnete Verdichter (28) einen variablen Hubraum hat, der vom elektronischen Rechner (ECU) so gesteuert wird, dass der Wärmeträger im ersten Tauscher (ECH1) eine konstante Temperatur hat.

4. Verfahren nach einem der vorhergehenden Ansprüche, **dadurch gekennzeichnet, dass** es darin besteht, die Tabellen von gespeicherten Werten anzusteuern, die es ermöglichen, die Temperatur (T1) des Luftstroms (F1) in Abhängigkeit von der Umgebungstemperatur (Tamb, Tair_ext) zu berechnen.

5. Verfahren nach Anspruch 2 oder 3, **dadurch gekennzeichnet, dass** der erste Tauscher (ECH1) ein Verdampfer ist, und dass es darin besteht, eine Schätzung der Temperatur der Luft am Ausgang des Verdampfers (ECH1) als Maß der Temperatur (T1) des ersten Luftstroms durchzuführen.

6. Verfahren nach Anspruch 5, **dadurch gekennzeichnet, dass** die Schätzung darin besteht, bei der Regelung einen Zyklus von Schritten (121-126) auszuführen, der aufweist:

- einen Schritt (121) der Messung der Umgebungstemperatur (Tamb; Tair_ext); dann
- einen Schritt (122) der Berechnung der Lufttemperatur (TAC_on) am Ausgang des Verdampfers (ECH1) unter der Annahme, dass der Verdichter (28) aktiv ist; dann
- einen Schritt (123) eines Aktivitätstests des Verdichters (28), derart, dass:

♦ wenn der Aktivitätstest (123) des Verdichters positiv ist:

ein Schritt (125) der Zuordnung der berechneten Temperatur (TAC_on) zu einem Signal durchgeführt wird, das für die Schätzung der Lufttemperatur (Tair_eva) am Ausgang des Verdampfers (ECH1) repräsentativ ist; oder

♦ wenn der Aktivitätstest (123) des Verdichters negativ ist:

ein Schritt (124) der Zuordnung der im vorhergehenden Schritt (121) gemessenen Umgebungstemperatur (Tair_ext) zu einem Signal durchgeführt wird, das für die Schätzung der Lufttemperatur (Tair_eva) am Ausgang des Verdampfers (ECH1) repräsentativ ist.

7. Verfahren nach Anspruch 6, **dadurch gekennzeichnet, dass** der Schritt (122) der Berechnung der Lufttemperatur (TAC_on) am Ausgang des Verdampfers (ECH1) darin besteht:

- einen Proportionalitätskoeffizient k zu berechnen, der von der an das Gebläse angelegten Spannung abhängt (Rückmeldung_Gebläse);
- eine Schätzung der maximalen Temperatur am Ausgang des Verdampfers (Teva_max) und der minimalen Temperatur am Ausgang des Verdampfers (Teva_min) in Abhängigkeit von dem gemessenen Wert der Umgebungstemperatur (Tair_ext) zu berechnen, die im vorhergehenden Schritt (121) gemessen wurde; dann
- eine Schätzung der Lufttemperatur am Ausgang des Verdampfers (TAC_on) mit Hilfe der berechneten Parameter (k, Teva_min, Teva_max) gemäß einer vorbestimmten Beziehung wie

$$TAC\_on = Teva\_min + k * (Teva\_max-Teva\_min\}$$

zu berechnen.

8. Verfahren nach Anspruch 6 oder 7, **dadurch gekennzeichnet, dass** es darin besteht, auch einen Schritt (114) der Sättigung der Schätzung der Lufttemperatur am Ausgang des Verdampfers (Teva_0) anzuwenden.

9. Verfahren nach einem der Ansprüche 6 bis 8, **dadurch gekennzeichnet, dass** es darin besteht, auch einen Schritt (115) der Filterung der Schätzung der Lufttemperatur am Ausgang des Verdampfers (Teva_0; Teva_sat) anzuwenden.

10. Verfahren nach einem der vorhergehenden Ansprüche, **dadurch gekennzeichnet, dass** der zweite Tauscher (ECH2) mit einem Temperaturfühler (C2) zusammenwirkt, der dem elektronischen Rechner (ECU) einen für die Temperatur (T2) der im zweiten Tauscher erwärmten Luft repräsentativen Parameter liefert, so dass die Stellung des Mischorgans auch in Abhängigkeit von dieser Temperatur (T2) bestimmt wird.

Fig.1

14

40      42      44

| Ventilateur axial | Condenseur | Radiateur de refroidissement |

( trajet air refroid. moteur )

( circuit fluide frigorigène )

Compresseur

28

( circuit liquide refroid. moteur )

14
moteur à combustion interne

pompe à eau

( circuit liquide caloporteur )

évaporateur   F1

ECH1

radiateur de chauffage   F2

ECH2

( trajet air )

filtre à air

réglage de température

{ ECU
{ 30

AE

entrée d'air extérieur

ventilateur centrifuge

F500

20

26

18

entrée d'air recyclé

( trajet air recyclé )

| évacuation d'air | réseau de distribution d'air pulsé dans l'habitacle | AI |

F

## Fig. 2

Fig. 3

120 —⌇ ( Deb. )

Mesurer
Tair_ext. ⌇— 121

Calculer T_eva (TAC_on) ⌇— 122

123 ⌇

non ⟨ Compresseur actif? ⟩ oui

124 ⌇

Tair_eva=Tair_ext

125 ⌇

Tair_eva=TAC_on

non ⟨ Fin climatisation? ⟩ oui

126

( Fin ) ⌇— 127

# Fig. 4

**EP 1 258 376 B1**

## RÉFÉRENCES CITÉES DANS LA DESCRIPTION

**Documents brevets cités dans la description**

- EP 0839678 A